# EUROPEAN PATENT SPECIFICATION

(11) **EP 2 571 688 B1**
(45) Date of publication and mention of the grant of the patent: **15.04.2015**
(21) Application number: 11722144.0
(22) Date of filing: 18.05.2011
(51) Int. Cl.: B32B 27/08, H01B 3/00, H01B 7/02, H01B 7/29

(54) **HIGH TEMPERATURE INSULATING TAPE AND WIRE OR CABLE SHEATHED THEREWITH**
HOCHTEMPERATURISOLIERBAND UND DAMIT UMMANTELTER DRAHT ODER KABEL
BANDE ISOLANTE À HAUTE TEMPÉRATURE ET FIL OU CÂBLE REVÊTU PAR CELLE-CI

(30) Priority: 18.05.2010 GB 201008268
(43) Date of publication of application: 27.03.2013
(73) Proprietor: Tyco Electronics UK Ltd., Swindon, Wiltshire SN3 5HH (GB)
(72) Inventor: HAMMOND, Philip, Wiltshire SN4 8BJ (GB); PAGLIUCA, Antonio, Oxfordshire OX28 2EQ (GB)
(74) Representative: Bankes, Stephen Charles Digby
(86) International application number: PCT/GB2011/050942
(87) International publication number: WO 2011/144933

(56) References cited:
- EP-A1- 0 887 807
- EP-A2- 0 924 711
- WO-A1-89/00757
- GB-A- 2 460 686

## Description

This invention relates to high performance, high temperature resistant wires and cables, that may also be fire resistant, for use in demanding or extreme conditions such as in drilling or mining, commercial or military aerospace and marine applications and automotive, rail and mass transport. Such cables may be exposed to extremes of temperature as well as to corrosive substances or atmospheres or to fire. High performance wires generally comprise a functional core such as an electrical conductor or optical fibre, and one or more insulating and/or protective coatings. These coatings should be flexible and not too bulky, since wires are required in many cases to be of small diameter. Such small diameter, high performance wires may be formed by wrapping thin single or multilayer tapes, by extrusion or by a combination of these techniques.

Various types of polymer are known for use in wire and cable sheaths, such as polytetrafluoroethylene (PTFE) and polyetheretherketone (PEEK). PTFE has the advantage of being very tough as well as chemically inert, with a high softening point, low coefficient of friction and good electrical insulating properties. PEEK has found increasing use in wire and cable sheathing since it has good flame resistance, being self-extinguishing with very low smoke. It also has good elongation, good flexibility in thin sections such as films and good mechanical resistance to dynamic cut-through and scrape abrasion. It can however be susceptible to arc tracking and also to attack by acetone and strong acids.

EP-A-572 177 discloses an electrical insulation laminate of porous PTFE and PEEK. The purpose of this is to provide a flexible electrical insulation material for air frame wire insulation which is lightweight with high mechanical strength, thermal resistance and chemical resistance and reduced dielectric constant.

There is a demand for wire and cable insulations that are resistant to fire as well as to very high temperatures. One way of imparting such flame resistance is to apply a coating comprising mica particles, typically platelets, dispersed in a polymer matrix. JP-A-2003100149 for example discloses the use of a dispersion of fine mica powder and glass frit in a silicone resin for coating fire resistant cables.

Mica can however add to the cost and accordingly there is a need two reduce the mica content of cable sheaths. For example, JP-A-2006120456 seeks to avoid the use of mica by combining a glass tape to impart tensile strength and dimensional stability with a silicone tape to impart heat resistance, electrical characteristics and adhesiveness.

JP-A-2000011772 discloses a fire resistant coating made with a cross-linked silicone rubber mixed with aluminium hydroxide and mica powder. There is also a requirement for wires and cables of reduced diameter, which could be achieved by using sheaths of reduced thickness.

GB-A-2460686 discloses a wire having a functional core and a sheath including an inner flameproofing layer comprising mica particles dispensed in a polymer matrix such as silicone, a wrapped film of PEEK and an outer coating of PEEK or another polymer. In this way the required temperature and flame resistance can be obtained with mica confined to one layer of three, with a thickness of preferably not more than 100µm.

WO8900757 (Penneck) describes a wire having a good electrical and mechanical properties with an inorganic arc-control layer surrounding the conductor, an insulating layer comprising an aromatic polymer which surrounds the arc control layer and a secondary tracking control layer surrounding the insulating layer. The wire exhibits good resistance to dry arcing and wet tracking.

There remains however a need for wires and cables which, in addition to good insulation and high temperature resistance, have improved mechanical properties, especially at high temperatures.

According to a first aspect of the present invention there is provided a composite insulating tape comprising a laminate or co-extrusion of at least two layers, including a fire resistant first layer of a polymer matrix in which mica particles are dispersed and a second layer of a polymer containing aromatic and/or heterocyclic rings, characterized in that the second layer comprises a blend or alloy containing at least 65% by weight of a polyaryl ether ketone (PAEK) having a ratio of ketone to ether groups linking the aromatic rings of at least 1:1 and having a melting point of at least 350°C and a glass transition temperature of at least 150°C.

The insulating mica layer may have a backing layer, for example a supporting layer of glass fiber or a layer of another polymer such as a polyolefin.

In another embodiment the composite tape may have a fluoropolymer coating applied to the surface of the second layer opposite the first layer and/or to the surface of the first layer opposite the second layer. The fluoropolymer layers may for example be based on PTFE, PFA or FEP and can be applied by various means including application as a coating.

Advantage of the inner and/or outer fluoropolymer layers, applied to a wire include:
(i) increased electrical insulation;
(ii) improved stripping of insulation for wire termination; and
(iii) in the case of the fluropolymer coating on the outside of a wire insulated with a wrapped tape, the possibility of heating the fluoropolymer layer to fuse it and create a homogenous layer.

According to a further aspect of the present invention, there is provided a wire or cable comprising a core and a polymeric sheath, wherein the sheath includes;
(a) a composite insulating tape as defined above wrapped around the core with the first layer nearer the core; and
(b) a wrapped or extruded outer layer of a fluoropolymer.

The insulating first layer comprises mica dispersed in a polymeric matrix such as a polymeric siloxane.

It may be advantageous to apply an adhesive tie layer prior to application of the extruded outer fluoropolymer layer, particularly in cases where the composite tape includes a fluoropolymer coating and forms an outer coating on the second layer of the wrapped tape. Suitable materials for the tie layer include an epoxy or maleic functionalised fluorinated elastomer or, more preferably, a functionised fluropolymer such as PFA or PFTE. The adhesive tie layer can be applied by extrusion or by other coating methods such as dip coating.

Additionally, or alternatively, a heating or sintering step may be carried out prior to application of the fluoropolymer outer layer in order to fuse the first and second layer of the wrapped composite tape.

The fluoropolymer outer layer (b) is provided for additional strength, chemical resistance, flexibility and/or flame resistance. This outer layer may for example comprise polytetrafluoroethylene (PTFE), polyvinylidene fluoride (PVDF), polyethylenetetrafluroethylene, (ETFE), polyfluoroalkoxy (PFA) or copolymers or blends or alloys of any of these. This outer layer may be fixed or may be fused or sintered, preferably at a temperature of 350° to 420°C.

The second, structural layer of the tape may for example comprise a polyaryl ether ketone (PAEK) or a blend or alloy thereof. These comprise chains of aromatic rings with some linked by oxygen atoms and others by carbonyl groups. Those suitable for the purposes of the invention have higher melting points and glass transistion temperatures than PEEK.

Examples of PAEK's having the required melting point (Tₘ) and glass transition temperature (T_{g}) are set out in Table 1 below, in which the polymers are indentified by their abbreviated names where E stands for ether and K for ketone and Φ indicates a benzene ring, so that for example PEKK is polyetherketoneketone. The preferred polymers are those in which the ratio of ketone linkages to ether linkages is 1:1 or greater, these compounds having the higher T_{g} and Tₘ.

| **Table 1** | | | |
|---|---|---|---|
| **Polymer** | **Structure** | **T_{g} (°C)** | **Tₘ (°C)** |
| PEK | -(-0-Φ-C0-Φ-)-ₙ | 163 | 361 |
| PEEKK | -(-0-Φ-0-Φ-C0-Φ-C0-Φ)ₙ | 154 | 358 |
| PEKEKK | -(-0-Φ-C0-Φ-0-Φ-C0-C0-Φ)-ₙ | 173 | 371 |
| PEKK | -(-0-Φ-C0-Φ-C0-Φ-)ₙ | 165 | 391 |
| PEKKK | -(-0-Φ-C0-Φ-C0-Φ-C0-Φ-)-ₙ | 175 | 439 |

The second layer may have a thickness of 25 to 100 µm, more preferably 25 to 75 µm. In some embodiments, each of the first and second layers of tape (a) and outer fluoropolymer layer (b) has the thickness of 25 to 50 µm.

The second layer may comprise a blend or alloy containing at least 50%, and more preferably 65%, of PAEK. For wires and cables requiring a high degree of flame retardency thicker layers, especially of mica-containing polymer, will be required. The inner and outer fluoropolymer coatings, where used, will preferably have a thickness of 2 to 25 µm.

Polymers that may be blended or alloyed with the PAEK include those made up of heterocyclic units containing a six-membered ring fused to a five-membered ring, for example polyimide, polybenzimidazole, polybenzoxazole and polybenzothiazole and copolymers thereof.

The tapes described above can be applied to numerous different types of core, notably conductive wires or cables, for example copper, which may be nickel- or tin-coated or silver-plated, aluminium, typically copper-clad aluminium, silver or steel. For other purposes, non-metallic cores such as carbon fibre or polymeric or ceramic cores may be used. The cable may be single core or multi-core or may comprise a twisted pair of wires, a multi-strand core or a braid. Any of these cores may be coated with copper, nickel, tin or silver.

Preferred embodiments of the invention will now be described with reference to the accompanying drawings wherein:
FIG.1 shows how an insulated wire according to the present invention can be made by wrapping a composite tape containing PAEK and other polymers;
FIG.2 is a cross-section through a multi-coated wire in accordance with a first embodiment of the invention; and
FIG.3 is a cross-section through a coated wire in accordance with a second embodiment of the invention; and
FIG.4 is an enlarged view of a composite tape in accordance with another embodiment of the invention.

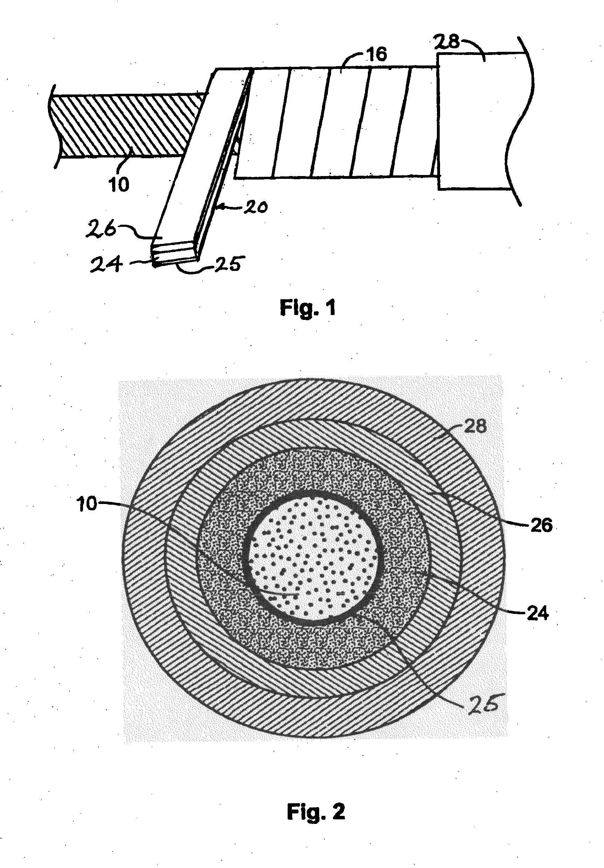

Referring first to Fig.1, a multi-stranded conductor 10, which may for example be of copper, uncoated or coated with nickel, silver or tin, aluminium, which may be copper clad, steel or a non-metallic cable such as carbon fibre, polymer fibre or ceramic fibre, has a three-layer sheath applied to it by winding and extrusion. A composite tape 20, is wound spirally onto the core to form a wound coating 16.

The composite tape comprises a first layer 24, for example of silicone with mica platelets distributed in it. Its surface nearest the core 10 has a coating 25 of a fluoropolymer such as PTFE.

On the opposite side of the first layer 24 is laminated a second layer 26, for example of polyaryletherketone.

Finally an outer layer 28 of fluoropolymer is applied, for example by extrusion or tape wrapping. In Figure 1 this layer is shown as being extruded, but it could be wrapped as a composite film with the first and second layers 24, 26.

The first and second layers are preferably wound spirally around the core with an overlap of 40 to 70%, preferably 48 to 58%

Fig.2 shows a cross-section through a cable which a three-layer sheath has been applied around the conductor 10, for example as described in relation to Fig.1. The first layer 24, immediately surrounding the conductor, is a mica-containing sheath to impart insulation and possibly flame resistance. This may for example be of mica-containing silicone. This layer has on its inner surface, next to the conductor, a coating 25 of PTFE or silicone. Alternatively this side of the mica layer could be backed with a glass fibre and/or with a polyethylene layer.

The second layer 26 comprises polyaryletherketone having a thickness of 25 to 100µm. The PAEK may be used alone or as a blend or alloy with other polymers. The blend or alloy should preferably contain at least 50%, and more preferably at least 65%, of PAEK.

The outer layer 28 can be either extruded or wrapped, suitably as part of a composite tape with the first and second layers. It provides an encapsulation layer to form an additional layer of protection to the cable. Any of the polymers, polymer blends or alloys listed above for this layer can be used. PTFE for example could sintered to provide exceptional chemical resistance as required by the aerospace market.

The synergistic combination of mica-containing polymer and PAEK in this embodiment can provide a high temperature, fire resistant wire with potentially low weight and low overall diameter. The mica can provide insulation and fire resistance up 1000°C, and in combination with the PAEK provides improved mechanical properties including dynamic cut-through resistance, even at high temperatures, non burning characteristics and very low smoke emission. The manufacturing process, which could include high temperature sintering, must support semi-crystallinity in the structural PAEK layer

The two layers 24 and 26 are applied as in Figure 1, as a preformed single composite wrapped layer which may be formed from a single or double mica layer on a film or tape of the aromatic polymer having the required high Tₘ and T_{g} values. The mica layer comprises mica particles dispensed in a polymeric matrix such as silicone or a polymeric siloxane, with or without an inner coating layer 25. For the outer fluoropolymer layer 28, the range of contents may be the same as in the embodiment described above. Again, the outer layer may be sintered.

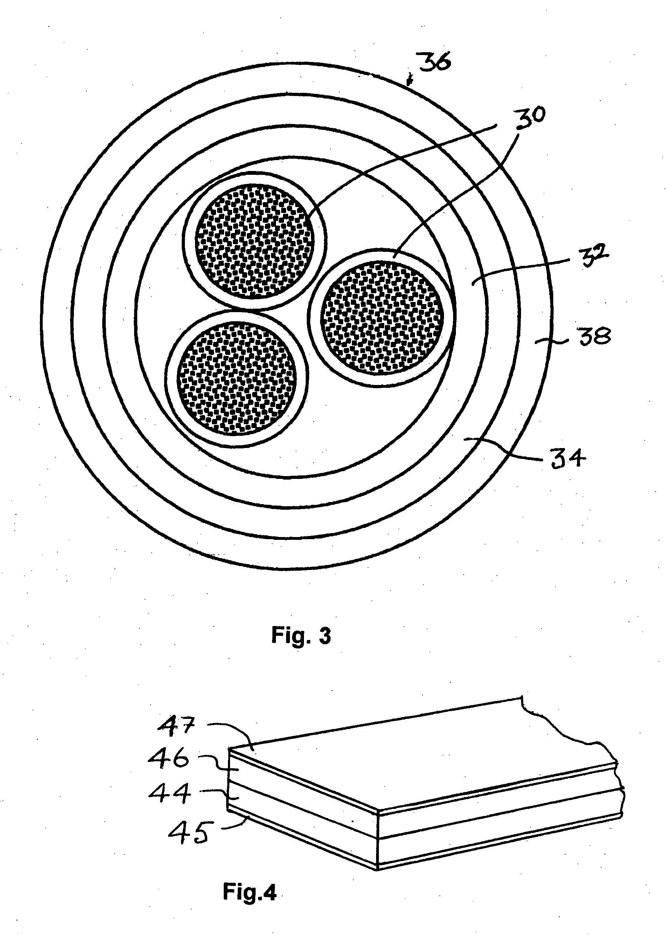

As illustrated in Fig. 3, a wrapped composite film 36 can be used as a structural layer for a wide variety of wire or cable constructions. This could include a conductor with another polymeric insulation, a complete cable construction with or without a braid, such as a twisted pair or a quad of twisted pairs such as Cat 7 cable. In the embodiment illustrated in Fig. 3, the three-layer coating of the invention is formed around a three-core cable 30 with an inner flameproofing or fire-resistant insulation layer 32 of mica particles in a matrix of silica or the like, an intermediate layer 34 of PAEK or another aromatic and/or heterocyclic polymer or polymer blend and an outer protective layer 38 can have a composition selected from the same ranges as the protective layers of the embodiments described above.

To render the protective sheath still tougher and more resistant to chemical attack, the sheath around the wire or cable of the invention may be cross-linked by electron beam radiation, preferably at elevated temperature and preferably in an inert atmosphere.

Finally, the sheath may be subjected to an annealing process, suitably at 170 to 300°C, preferably for at least 12 hours and up to 24 hours.

Referring now to Fig. 4, a composite table in accordance with a further embodiment of the invention is described, in which the first and second layers are numbered as 44 and 46 respectively. These may have the same compositions as the corresponding layers in the embodiments of Figures 1 to 3.

In this embodiment, a fluorocarbon coating 45 is applied to the side of the first layer opposite the second, which will be the inside of the coating to be formed by wrapping the tape around a conductor. A second fluorocarbon coating 47 is applied to the second coating 46, on the side opposite the first coating 44. This will thus constitute an outer layer of the wrapped film, over which a further protective outer layer of a fluoropolymer may be applied, by wrapping or extrusion.

The composite tape for the invention is preferably modular in design. The mica layer can be increased in thickness to impart proportionately increased fire resistant properties in addition to electrical insulation. While the preferred thickness for this layer will not exceed 50 µm for most purposes, in order to keep the overall wire diameter to a minimum, where fire resistance is required the thickness of this layer may be greater than 50 µm, for example in a range from 50 to 100 µm. The thicknesses or other layers may also be adjusted to meet individual requirements.

## Claims

1. A composite insulating tape (20) comprising a laminate or co-extrusion of at least two layers, including a fire resistant first layer (24) of a polymer matrix in which mica particles are dispersed and a second layer (26) of a polymer containing aromatic and/or heterocyclic rings, **characterized in that** the second layer (26) comprises a blend or alloy containing at least 65% by weight of a polyaryl ether ketone (PAEK) having a ratio of ketone to ether groups linking the aromatic rings of at least 1:1 and having a melting point of at least 350°C and a glass transition temperature of at least 150°C.

2. A composite insulating tape according to claim 1 wherein the PAEK of the second layer (26) is blended or alloyed with a polymer of heterocyclic units containing a six-membered ring fused with a five-membered ring.

3. A composite insulating tape according to claim 1 or claim 2 wherein the insulating first layer (24) has a fluorocarbon or silicone layer or coating (25) applied to its surface opposite the second layer (26).

4. A composite insulating tape according to any preceding claim further comprising a layer (47) of a fluoropolymer on the side of the second layer (46) opposite the first layer (44).

5. A wire or cable comprising a core (10) and a polymeric sheath (16, 28), wherein the sheath includes:
(a) a composite insulating tape (20) according to any preceding-claim wrapped around the core with the first layer (24) nearer the core and
(b) a wrapped or extruded outer layer (28) of a fluoropolymer.

6. A wire or cable according to claim 5 wherein the outer protective polymer layer (28) is sintered or fused.

7. A wire or cable according to claim 5 or claim 6 wherein the second layer (26) is at least partly sintered or fused.

8. A wire or cable according to claim 7 wherein the entire sheath (16) is sintered.

9. A wire or cable according to any one of claims 5 to 8 wherein said laminated composite film (20) is spirally wound onto the core (10) with an overlap of 40 to 70%, preferably 48 to 58%.

10. A wire or cable according to any one of claims 5 to 9 wherein each of the first and second layers (24, 26) and the protective outer layer has a thickness of 25 to 100µm.

11. A wire or cable according to claim 5 to 9 wherein each of the first and second layers (24, 26) and the protective outer layer (28) has a thickness of 25 to 50 µm.

12. A method of making an insulated wire or cable which comprises the steps of forming a sheath (16) by spirally winding onto an elongate core (10) a composite tape (20) comprising a first layer (24) of a polymeric matrix in which mica particles are dispersed and a second layer (26) comprising a blend or alloy containing at least 65% by weight of a polyaryl ether ketone (PAEK) having a ratio of ketone to ether groups linking the aromatic rings of at least 1:1 and having a melting point of at least 350°C and a glass transition temperature of 150°C, applying an outer layer (28) of a fluoropolymer by wrapping or extrusion and sintering at least said outer layer.

13. A method according to claim 12 wherein said sintering takes place at a temperature in the range from 350°C to 420°C.

14. A method according to claim 12 or claim 13 wherein the outer layer (16) is cross-linked by the application of electron beam radiation at elevated temperature and in an inert atmosphere.

15. A method according to any one of claims 12 to 14 wherein the sheath (16) is subjected to an annealing process at 170 to 300°C for up to 24 hours.

## Patentansprüche

1. Verbundstoff-Isolierband (20) umfassend ein Laminat oder eine Coextrusion von mindestens zwei Schichten, das eine feuerfeste erste Schicht (24) aus einer Polymermatrix, in der Glimmerteilchen dispergiert sind, und eine zweite Schicht (26) aus einem Polymer, das aromatische und/oder heterocyclische Ringe enthält, umfasst, **dadurch gekennzeichnet, dass** die zweite Schicht (26) eine Mischung oder Legierung umfasst, die mindestens 65 Gew.-% eines Polyaryletherketons (PAEK) enthält, das ein Verhältnis von Keton- zu Ethergruppen, die die aromatischen Ringe verknüpfen, von mindestens 1:1 aufweist und einen Schmelzpunkt von mindestens 350 °C und eine Glasübergangstemperatur von mindestens 150 °C aufweist.

2. Verbundstoff-Isolierband nach Anspruch 1, wobei das PAEK der zweiten Schicht (26) mit einem Polymer von heterocyclischen Einheiten gemischt oder legiert ist, die einen sechsgliedrigen Ring enthalten, der mit einem fünfgliedrigen Ring anelliert ist.

3. Verbundstoff-Isolierband nach Anspruch 1 oder Anspruch 2, wobei die erste Isolierschicht (24) eine Fluorkohlenstoff- oder Siliconschicht oder -beschichtung (25) aufweist, die auf ihre Oberfläche der zweiten Schicht (26) entgegengesetzt aufgebracht ist.

4. Verbundstoff-Isolierband nach einem der vorhergehenden Ansprüche, ferner eine Schicht (47) aus einem Fluorpolymer auf der Seite der zweiten Schicht (46) der ersten Schicht (44) entgegengesetzt umfassend.

5. Draht oder Kabel umfassend einen Kern (10) und einen polymeren Mantel (16, 28), wobei der Mantel Folgendes umfasst:
(a) ein Verbundstoff-Isolierband (20) nach einem der vorhergehenden Ansprüche, das um den Kern mit der ersten Schicht (24) näher zum Kern gewickelt ist und
(b) eine gewickelte oder extrudierte äußere Schicht (28) aus einem Fluorpolymer.

6. Draht oder Kabel nach Anspruch 5, wobei die äußere schützende Polymerschicht (28) gesintert oder geschmolzen ist.

7. Draht oder Kabel nach Anspruch 5 oder Anspruch 6, wobei die zweite Schicht (26) mindestens teilweise gesintert oder geschmolzen ist.

8. Draht oder Kabel nach Anspruch 7, wobei der gesamte Mantel (16) gesintert ist.

9. Draht oder Kabel nach einem der Ansprüche 5 bis 8, wobei die laminierte Verbundstofffolie (20) spiral auf den Kern (10) mit einer Überlappung von 40 bis 70 %, bevorzugt 48 bis 58 %, gewunden ist.

10. Draht oder Kabel nach einem der Ansprüche 5 bis 9, wobei jede der ersten und zweiten Schichten (24, 26) und der schützenden äußeren Schicht (28) eine Dicke von 25 bis 100 µm aufweist.

11. Draht oder Kabel nach Anspruch 5 bis 9, wobei jede der ersten und zweiten Schichten (24, 26) und der schützenden äußeren Schicht (28) eine Dicke von 25 bis 50 µm aufweist.

12. Verfahren zum Herstellen eines isolierten Drahts oder Kabels, das die Schritte umfasst des Bildens eines Mantels (16) durch spiralenförmiges Wickeln auf einen länglichen Kern (10) eines Verbundstoffbands (20), das eine erste Schicht (24) aus einer polymeren Matrix, in der Glimmerteilchen dispergiert sind, und eine zweite Schicht (26) umfasst, die eine Mischung oder Legierung umfasst, die mindestens 65 Gew.-% eines Polyaryletherketons (PAEK) enthält, das ein Verhältnis von Keton- zu Ethergruppen, die die aromatischen Ringe verknüpfen, von mindestens 1:1 aufweist und einen Schmelzpunkt von mindestens 350 °C und eine Glasübergangstemperatur von mindestens 150 °C aufweist, des Aufbringens einer äußeren Schicht (28) aus einem Fluorpolymer durch Wickeln oder Extrusion und Sinterns mindestens der äußeren Schicht.

13. Verfahren nach Anspruch 12, wobei das Sintern bei einer Temperatur im Bereich von 350 °C bis 420 °C erfolgt.

14. Verfahren nach Anspruch 12 oder Anspruch 13, wobei die äußere Schicht (16) durch Aufbringen von Elektronenstrahlstrahlung bei erhöhter Temperatur und in einer inerten Atmosphäre vernetzt wird.

15. Verfahren nach einem der Ansprüche 12 bis 14, wobei der Mantel (16) einem Tempervorgang bei 170 bis 300 °C bis zu 24 Stunden lang unterworfen wird.

## Revendications

1. Bande isolante composite (20) comprenant un stratifié ou une co-extrusion d'au moins deux couches, parmi lesquelles une première couche (24) résistant au feu constituée d'une matrice polymère dans laquelle sont dispersées des particules de mica et une deuxième couche (26) constituée d'un polymère contenant des cycles aromatiques et/ou hétérocycliques, **caractérisée en ce que** la deuxième couche (26) comprend un mélange ou alliage contenant au moins 65 % en poids de polyaryl-éther-cétone (PAEK) présentant un rapport entre les groupes cétone et éther liant les cycles aromatiques d'au moins 1:1 et présentant un point de fusion d'au moins 350 °C et une température de transition vitreuse d'au moins 150 °C.

2. Bande isolante composite selon la revendication 1, dans lequel la PAEK de la deuxième couche (26) est mélangée ou alliée à un polymère composé d'unités hétérocycliques contenant un cycle à six chaînons fusionné à un cycle à cinq chaînons.

3. Bande isolante composite selon la revendication 1 ou la revendication 2, dans lequel la première couche (24) isolante présente une couche ou un revêtement de fluorocarbone ou de silicone (25) appliqué(e) sur sa surface opposée à la deuxième couche (26).

4. Bande isolante composite selon l'une quelconque des revendications précédentes, comprenant en outre une couche (47) composée de fluoropolymère sur le côté de la deuxième couche (46) qui est opposé à la couche (44).

5. Fil ou câble comprenant une âme (10) et une gaine polymère (16, 28), dans lequel la gaine comporte :
(a) une bande isolante composite (20) selon l'une quelconque des revendications précédentes enroulée autour de l'âme, la première couche (24) étant plus proche de l'âme, et
(b) une couche extérieure (28) composée de fluoropolymère qui est enroulée ou extrudée.

6. Fil ou câble selon la revendication 5, dans lequel la couche extérieure polymère protectrice (28) est frittée ou fusionnée.

7. Fil ou câble selon la revendication 5 ou la revendication 6, dans lequel la deuxième couche est au moins partiellement frittée ou fusionnée.

8. Fil ou câble selon la revendication 7, dans lequel la totalité de la gaine (16) est frittée.

9. Fil ou câble selon l'une quelconque des revendications 5 à 8, dans lequel ledit film composite stratifié (20) est enroulé en spirale sur l'âme (10) avec un chevauchement de l'ordre de 40 à 70 %, de préférence de 48 à 58 %.

10. Fil ou câble selon l'une quelconque des revendications 5 à 9, dans lequel chacune des première et deuxième couches (24, 26) ainsi que la couche extérieure protectrice (28) ont une épaisseur de l'ordre de 25 à 100 µm

11. Fil ou câble selon l'une quelconque des revendications 5 à 9, dans lequel chacune des première et deuxième couches (24, 26) ainsi que la couche extérieure protectrice (28) ont une épaisseur de l'ordre de 25 à 50 µm

12. Procédé de réalisation d'un fil ou câble isolé comprenant les étapes consistant à former une gaine (16) en enroulant en spirale sur une âme (10) allongée une bande composite (20) comprenant une première couche (24) constituée d'une matrice polymère dans laquelle sont dispersées des particules de mica et une deuxième couche (26) comprenant un mélange ou alliage contenant au moins 65 % en poids de polyaryl-éther-cétone (PAEK) présentant un rapport entre les groupes cétone et éther liant les cycles aromatiques d'au moins 1:1 et présentant un point de fusion d'au moins 350 °C et une température de transition vitreuse d'au moins 150 °C, à appliquer une couche extérieure (28) composée de fluoropolymère en enroulant ou en extrudant ou en frittant au moins ladite couche extérieure.

13. Procédé selon la revendication 12, dans lequel ledit frittage s'effectue à une température de l'ordre de 350 °C à 420 °C.

14. Procédé selon la revendication 12 ou la revendication 13, dans lequel la couche extérieure (16) est réticulée par l'application d'une radiation électronique à une température élevée et sous une atmosphère inerte.

15. Procédé selon l'une quelconque des revendications 12 à 14, dans lequel la gaine (16) est soumise à un processus de recuit entre 170 °C et 300 °C pendant une durée allant jusqu'à 24 heures.
